# EUROPEAN PATENT SPECIFICATION

(11) **EP 3 862 744 B1**
(45) Date of publication and mention of the grant of the patent: **16.09.2026**
(21) Application number: 19869029.9
(22) Date of filing: 03.10.2019
(51) Int. Cl.: G01N 1/22, G01N 15/02, G01N 15/0227, G01N 15/1433, G01N 23/2251

(54) **DUST MEASUREMENT DEVICE AND DUST MEASUREMENT METHOD**
STAUBMESSVORRICHTUNG UND STAUBMESSVERFAHREN
DISPOSITIF DE MESURE DE POUSSIÈRE ET PROCÉDÉ DE MESURE DE POUSSIÈRE

(30) Priority: 05.10.2018 JP 2018190111
(43) Date of publication of application: 11.08.2021
(73) Proprietor: Akebono Brake Industry Co., Ltd., Tokyo 103-8534 (JP)
(72) Inventor: NAKAGAWA, Hidehiko, Tokyo 103-8534 (JP); MATSUDA, Taro, Tokyo 103-8534 (JP); YAMAZAKI, Yasuko, Tokyo 103-8534 (JP); SUZUKI, Shigetomo, Tokyo 103-8534 (JP); UENO, Atsushi, Tokyo 103-8534 (JP)
(74) Representative: Grünecker Patent- und Rechtsanwälte PartG mbB
(86) International application number: PCT/JP2019/039202
(87) International publication number: WO 2020/071510

(56) References cited:
- WO-A1-2015/159870
- WO-A1-2017/033219
- WO-A1-2017/097901
- JP-A- 2015 025 713
- JP-A- 2016 100 316
- JP-A- H11 311 272
- JP-A- S61 173 132
- JP-U- H0 221 345
- US-A- 4 570 494
- US-A- 4 590 792
- US-A- 5 162 053
- US-A1- 2013 319 239
- US-A1- 2015 260 617

## Description

### TECHNICAL FIELD

The present invention relates to a dust measurement device and a dust measurement method for collecting and measuring dust from an aerosol containing the dust generated by a friction material that generates a braking force.

### BACKGROUND ART

For example, when a brake device such as a disk brake or a drum brake mounted on an automobile or the like operates, debris is generated due to wear between a brake pad and a rotor. Therefore, for example, an actual braking state, behavior, and wear states of members of the brake device are reflected in shapes, sizes, wear debris generation amounts, and the like of the debris.

Therefore, when the materials, the shapes, the sizes, the wear debris generation amounts, and the like of the debris actually generated in the brake device are analyzed, the brake device can be improved and performance thereof can be improved.

Patent Literature 1 discloses a technology for improving an device operation rate, productivity, and classification accuracy in an airflow classifier used in manufacturing a fine-particle toner, in which fusion is less likely to occur due to a collision of to-be-classified raw materials. Further, an airflow classifier in which a composite plating film in which fine particles are dispersed and contained is provided on a surface of a member in the airflow classifier in which particles of a to-be-classified raw material collide is shown. Further, the airflow classifier includes a raw material sorting chamber 14 in which a plurality of classification exhaust flow paths 7, 8, and 9 branched by classification edges 2 and 3 are opened on an outlet side, and intake flow paths 11 and 12 are opened on an inlet side; an airflow forming unit that generates an airflow that flows from the intake flow paths 11 and 12 toward the classification exhaust flow paths 7, 8, and 9; and a raw material supply nozzle 16 that pressure-feeds and injects a to-be-classified raw material 15 into the raw material sorting chamber 14 by using a compressed gas. The following mode is shown. That is, particles of the to-be-classified raw material 15 pressure-fed and injected into the raw material sorting chamber 14 are classified into the respective classification exhaust flow paths 7, 8, and 9 by a curved linear scattering and lowering action corresponding to particle diameters based on a Coanda effect.

A particle collection device of Patent Literature 2 discloses a technology for analyzing an evaluation of the number, a shape, components, and the like and enabling a use of a collision plate of an optional size even when dust is collected in a place where there is a little floating dust, such as in a clean room. Further, the particle collection device of Patent Literature 2 uses a clean mirror-finished collision plate. Further relevant prior art is described in US 4 590 792 A, US 2013/319239 A1, US 4 570 494 A, US 2015/260617 A1, WO 2017/097901 A1.

### CITATION LIST

### PATENT LITERATURE

Patent Literature 1: JP-A-H10-202192
Patent Literature 2: JP-A-S63-75639

### SUMMARY OF INVENTION

### TECHNICAL PROBLEM

For example, particles such as dust collected by colliding with a collision plate as shown in Patent Literature 2 can be observed using, for example, a scanning electron microscope (SEM). That is, an observer can visually grasp shapes, sizes, materials, and the like of the particles from an image obtained by the scanning electron microscope.

However, debris generated from a brake device are as small as about submicron and contain components of various materials. Therefore, it is actually difficult to observe the debris with the scanning electron microscope. Specifically, it may be difficult to distinguish an uneven shape on a surface of a collection board that collects the debris from the debris. Further, due to commonality of materials, outer shapes of materials of the debris and a boundary between the debris and the collection board, that is, an outline shape of the debris may become unclear. Further, when the surface of the collection board is subjected to a plating treatment, the shapes or the like of the debris may be difficult to visually recognize due to an influence of a skin material behind a coating film formed on the surface of the collection board.

The present invention has been made in view of the above circumstances, and an object thereof is to provide a dust measurement device and a dust measurement method capable of easily observing debris generated from a brake device.

### SOLUTION TO PROBLEM

In order to solve the aforementioned problem, a dust measurement device is provided having the features defined in claim 1. Further, a dust measurement method is provided having the features defined in claim 3. Further preferred embodiments are defined in the dependent claims.

### ADVANTAGEOUS EFFECTS OF INVENTION

According to a dust measurement device and a dust measurement method of the present invention, debris generated from a brake device are easily observed. That is, since a material of a first substance and a material of a second substance are different from each other, when a surface of a collection board is observed as an image by using a scanning electron microscope or the like, the surface of the collection board and dust attached thereto can be distinguished from each other by a difference in the materials, and a shape, a size, and the like of the dust can be clearly identified.

The present invention has been briefly described above. Details of the present invention are further clarified by reading a mode for carrying out the invention (hereinafter, referred to as "embodiment") described below with reference to attached drawings.

### BRIEF DESCRIPTION OF DRAWINGS

[Fig. 1] Figs. 1(a) and 1(b) are specific examples of an appearance of a collection board according to an embodiment of the present invention. Fig. 1(a) is a front view and Fig. 1(b) is a plan view.
[Fig. 2] Fig. 2(a) is a front view showing an appearance of a classifier. Fig. 2(b) is a partially enlarged cross-sectional view showing a vertical cross section of a part of the classifier of Fig. 2(a). Fig. 2(c) is a partial cross-sectional view showing a part of Fig. 2(b).
[Fig. 3] Fig. 3 is a schematic diagram showing a list of substances not contained in wear debris.
[Fig. 4] Fig. 4 is a block diagram showing a configuration example of a system including a wear debris collection device.
[Fig. 5] Fig. 5 is a vertical cross-sectional view showing a configuration example of a brake attachment portion of a brake test device.
[Fig. 6] Fig. 6 is a flowchart showing a manufacturing step of the collection board.
[Fig. 7] Fig. 7 is a flowchart showing a procedure for measuring the wear debris.
[Fig. 8] Fig. 8 is a front view showing an example of an image when observing, with a scanning electron microscope, debris collected using the collection board according to the embodiment of the present invention.
[Fig. 9] Figs. 9(a), 9(b), and 9(c) are front views showing examples of images when observing, with the scanning electron microscope, debris collected using a collection board of fluorine resin-treated glass fibers, respectively.
[Fig. 10] Figs. 10(a), 10(b), and 10(c) are front views showing examples of images when observing, with the scanning electron microscope, debris collected using a collection board configured with aluminum, respectively.

### DESCRIPTION OF EMBODIMENTS

A specific embodiment according to the present invention will be described below with reference to the drawings.

### <Appearance of Collection Board>

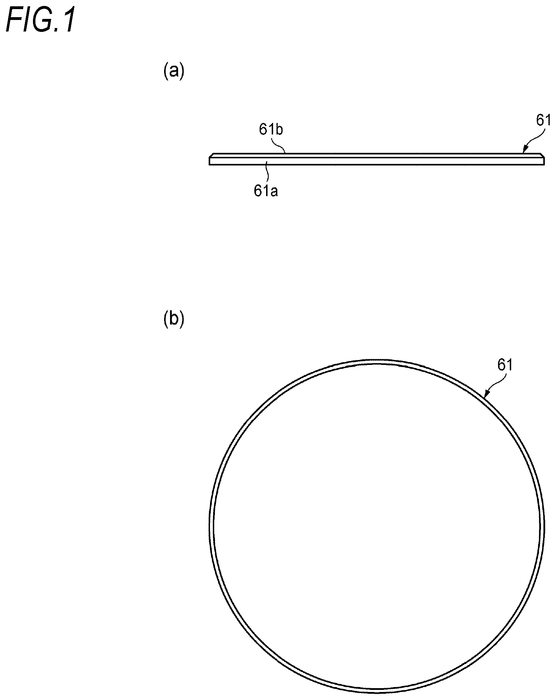

Figs. 1(a) and 1(b) show a specific example of an appearance of a collection board 61 according to an embodiment of the present invention. Fig. 1(a) is a front view, and Fig. 1(b) is a plan view.

The collection board 61 shown in Figs. 1(a) and 1(b) is formed in a thin disk shape. The collection board 61 includes a base material 61a and a thin film 61b formed on a surface of the base material 61a. In the present embodiment, aluminum is used as a material of the base material 61a. Further, the thin film 61b is formed on the surface of the base material 61a by an electroless nickel-plating treatment.

The material and a thickness of the base material 61a are determined such that the collection board 61 can secure a sufficient strength. Regarding a material of the thin film 61b, a substance not contained in wear debris is selected such that the wear debris to be measured and the thin film 61b are easily distinguished from each other. Further, when the wear debris are observed using a scanning electron microscope (SEM), a substance that hardly influences an image of the wear debris during observation is selected as the material of the thin film 61b.

For example, since nickel is not contained in the wear debris, it is easy to distinguish between the thin film 61b on the collection board 61 and the wear debris when using the thin film 61b formed by the electroless nickel-plating treatment. Further, it has been confirmed that, for example, the nickel hardly influences observation of the wear debris when the wear debris are observed using the scanning electron microscope.

It is desirable to limit the thickness of the thin film 61b such that an influence of the material of the underlying base material 61a does not appear when the wear debris are observed using the scanning electron microscope, and it is preferable that the thickness of the thin film 61b is defined to be, for example, a thickness of 5µm or more.

Further, regarding a state of a surface of the thin film 61b, if there is a scratch or the like, submicron-sized debris may enter an inside of the scratch and become difficult to observe. Therefore, it is desirable that the surface of the thin film 61b is mirror-polished to be smooth. That is, a surface roughness of the thin film 61b is defined so as to be at least equal to or smaller than a particle diameter of the wear debris to be observed.

### <Configuration Example and Operation Principle of Classifier>

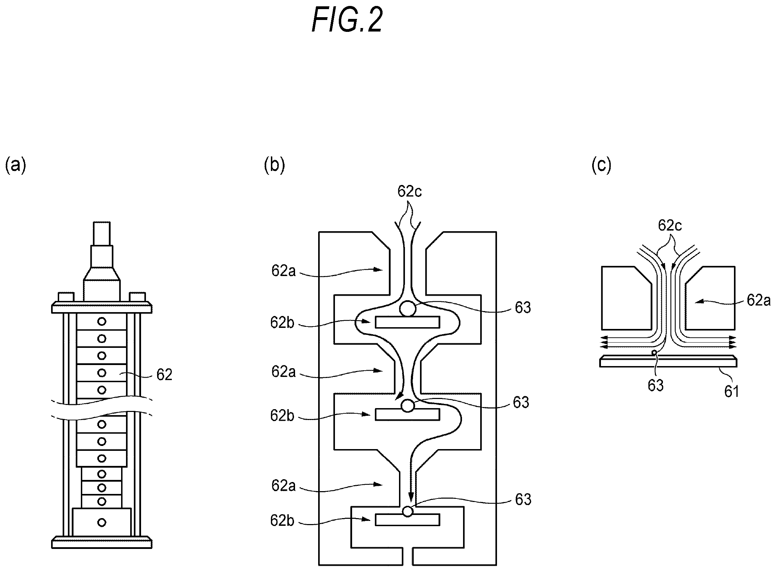

Fig. 2(a) shows an example of an appearance of a classifier 62 that can be used for collecting the debris. Further, Fig. 2(b) shows an enlarged view of a vertical cross section of a part of the classifier 62 in Fig. 2(a). Further, Fig. 2(c) shows a part of Fig. 2(b).

The classifier 62 shown in Figs. 2(a) to 2(c) is a known device called a low-pressure cascade impactor. The classifier 62 introduces an airflow containing debris generated by a brake device of an automobile or the like, and can classify and collect the debris for each size from the airflow. However, when components, shapes, sizes, and the like of the collected debris are observed with the scanning electron microscope or the like, there is a high possibility that component analysis or the like becomes difficult with a general collection board. Therefore, for example, the special collection board 61 shown in Figs. 1(a) and 1(b) is used.

The classifier 62 shown in Fig. 2(a) has a structure in which ten collection stages are stacked in a vertical direction and connected in series in a flow direction of an airflow. In an example shown in Fig. 2(b), three collection stages are continuously arranged in an upper-lower direction. As shown in Fig. 2(b), each collection stage of the classifier 62 includes a flow path of an airflow 62c including a nozzle 62a, and a collection portion 62b. Each collection portion 62b is disposed in a flat plate shape at a position facing an opening of the nozzle 62a. The collection board 61 is disposed at the collection portion 62b of each collection stage.

As shown in Fig. 2(b), diameters of the nozzles 62a of a plurality of collection stages of the classifier 62 are formed so as to gradually decrease from an upper stage side to a lower stage side. That is, the collection stage on an upper side is configured to be able to collect solid particles having a large particle diameter, and the collection stage on a lower side is configured to be able to collect solid particles having a small particle diameter.

As shown in Fig. 2(c), at each collection stage, the airflow 62c passes through the nozzle 62a and flows toward the collection board 61 in front at a high speed. Then, particles such as debris 63 contained in the airflow 62c are collected by the collection board 61 due to an inertial collision. The airflow 62c other than the collected particles is further directed to a downstream side.

Aluminum, glass fibers, or the like is used as a material of a general collection board used for the classifier 62. Further, in the electron microscope, a sample stage made of carbon is generally used.

### <List of Substances Not Contained in wear Debris>

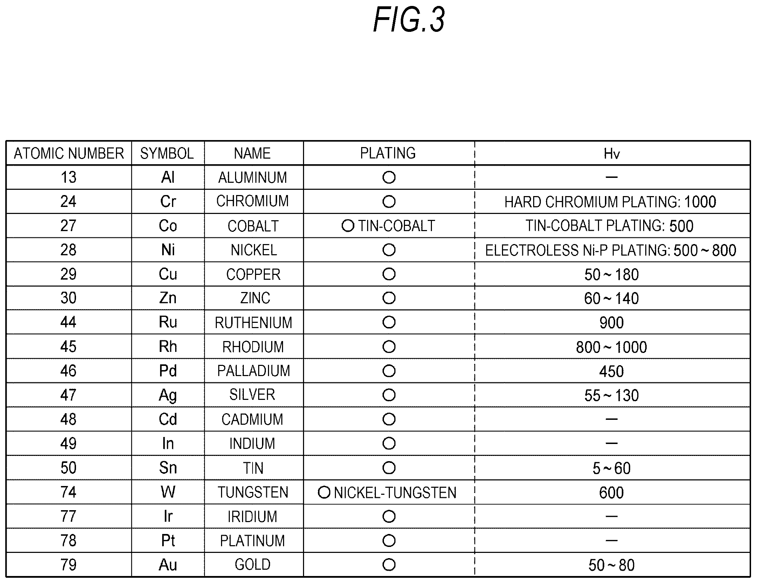

Fig. 3 shows a list of substances not contained in the wear debris and materials that can be plated. That is, except for components that may be contained in a friction material used in a general brake device of an automobile or the like and wear debris generated by wear of a rotor, substances that can be plated are shown in Fig. 3.

That is, it is assumed that at least the surface of the collection board 61 is formed by any substance of aluminum, chromium, cobalt, nickel, copper, zinc, ruthenium, rhodium, palladium, silver, cadmium, indium, tin, tungsten, iridium, platinum, and gold shown in Fig. 3. Accordingly, when the debris 63 collected by the collection board 61 are observed with the scanning electron microscope or the like, the collection board 61 and the debris 63 can be distinguished from each other based on a difference between substances.

Since any of the substances shown in Fig. 3 can be subjected to a plating treatment, the thin film 61b of the collection board 61 shown in Fig. 1(a) can be formed by the plating. Accordingly, when a strength required for the collection board 61 is sufficiently secured only by the base material 61a, a degree of freedom in selecting a substance of the thin film 61b is increased.

### <Configuration Example of System>

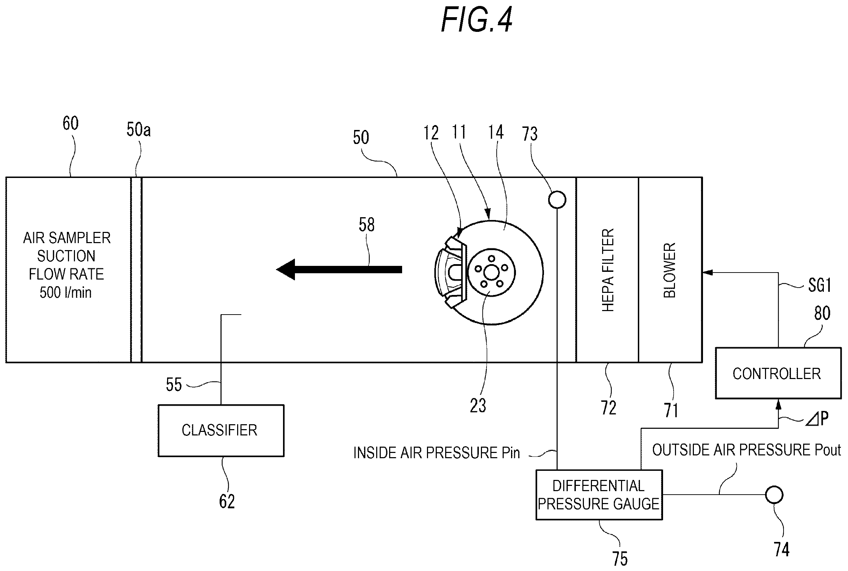

Fig. 4 shows a configuration example of a system including a wear debris collection device. The system shown in Fig. 4 is configured such that, when a brake 11 used in an automobile or the like is operated, debris generated due to wear of a brake pad in a caliper 12 and a disc-shaped rotor 14 are collected, and components, shapes, sizes, and the like of the debris can be analyzed. When the debris are actually analyzed, for example, it is assumed that the debris on the collection board 61 are observed using the scanning electron microscope not shown in Fig. 4.

The brake 11 shown in Fig. 4 is coupled to a brake test device 10 to be described later, and is held in a state where the rotor 14 can rotate and the caliper 12 can operate. The brake 11 is disposed in an inner space of a brake hood 50 as shown in Fig. 4 That is, a portion where the debris are generated and a portion where the generated debris are scattered are covered with the brake hood 50 in a state where an entire periphery thereof is sealed.

Accordingly, dust and the like outside the brake hood 50 can also be prevented from entering an inside of the brake hood 50. However, when the brake 11 is tested, since it is necessary to connect a rotating portion such as a shaft between the inside and an outside of the brake hood 50, it is difficult to completely eliminate a gap that allows the inside and the outside of the brake hood 50 to communicate with each other even when sealing is performed. Therefore, pressure control to be described later is performed such that the debris and the dust do not pass through the gap. By the pressure control, it is possible to prevent the dust and the like from an outside other than the debris from being mixed into the debris.

As shown in Fig. 4, a HEPA (high efficiency particulate air filter) filter 72 is disposed on a right side of the brake hood 50, and a blower 71 is further disposed on the right side of the brake hood 50. The blower 71 can send outside air into the inner space of the brake hood 50. An air blowing amount of the blower 71 is variable and is controlled by a control signal SG1. The HEPA filter 72 cleans air sent by the blower 71 by removing the dust and the like.

On the other hand, an air sampler 60 is coupled to a tip end portion 50a of the brake hood 50. The air sampler 60 can suck an airflow 58 from a portion that communicates with the inner space of the brake hood 50, and can collect the floating debris contained in the airflow 58. The air sampler 60 has a suction capacity of, for example, about 500[liters/minute], and a suction flow rate is variable. When the air blowing amount of the blower 71 is controlled, the suction flow rate of the air sampler 60 may be fixed.

A communication portion 55 is provided so as to be able to communicate with the inner space of the brake hood 50. The classifier 62 described above is connected to one end of the communication portion 55. Based on a principle of an aerodynamic diameter, the classifier 62 can individually collect and analyze the debris of each particle size such as less than 2.5 µm, 2.5 µm, and 10 µm by the collection board 61.

As shown in Fig. 4, a pressure sensor 73 is installed inside the brake hood 50. When an installation position of the pressure sensor 73 is, for example, on an upstream side of the brake 11 with respect to a direction of the airflow 58 and above the brake 11, it is easy to prevent characteristics of the pressure sensor 73 from varying due to heat generation of the brake 11. On the other hand, a pressure sensor 74 is installed in a space outside the brake hood 50. Therefore, the pressure sensor 74 can detect an outside air pressure Pout. Further, the pressure sensor 73 can detect an inside air pressure Pin in the brake hood 50. A differential pressure gauge 75 outputs a differential pressure signal ΔP indicating a differential pressure between the inside air pressure Pin detected by the pressure sensor 73 and the outside air pressure Pout detected by the pressure sensor 74.

A controller 80 generates a control signal SG1 based on the differential pressure signal ΔP output by the differential pressure gauge 75, and controls the blower 71 such that the differential pressure between the inside air pressure Pin and the outside air pressure Pout is eliminated. For example, when the controller 80 detects a state where the inside air pressure Pin is lower than the outside air pressure Pout by the differential pressure signal ΔP, the controller 80 adjusts the control signal SG1 so as to increase the air blowing amount per unit time of the blower 71. That is, a pressure in the inner space of the brake hood 50 decreases due to suction of air by the air sampler 60, but the decrease can be compensated by a pressure of air supplied into the brake hood 50 by the blower 71, and the inside air pressure Pin can be controlled to be the same as the outside air pressure Pout by adjusting the air blowing amount.

In the system shown in Fig. 4, although the controller 80 controls the air blowing amount of the blower 71 so as to eliminate the differential pressure between the inside air pressure Pin and the outside air pressure Pout, the suction flow rate of the air sampler 60 may be controlled or both may be controlled. In a case of controlling the suction flow rate of the air sampler 60, when the controller 80 detects a state where the inside air pressure Pin is lower than the outside air pressure Pout by the differential pressure signal ΔP, the controller 80 performs control to reduce the suction flow rate per unit time. Further, when the controller 80 detects a state where the inside air pressure Pin is higher than the outside air pressure Pout by the differential pressure signal ΔP, the controller 80 performs control to increase the suction flow rate per unit time.

When the differential pressure is controlled as described above, since the differential pressure between the inside air pressure Pin and the outside air pressure Pout is eliminated, a flow of air due to the differential pressure does not occur. That is, even when there is the gap that allows the inside and the outside of the brake hood 50 to communicate with each other, since there is no flow of air that passes through the gap, debris that float in air in the brake hood 50 do not leak to the outside from the gap. At the same time, the dust and the like outside the brake hood 50 also do not enter the inside from the gap. As a result, the dust is prevented from being mixed into the collected debris.

### <Configuration Example of Brake Test Device>

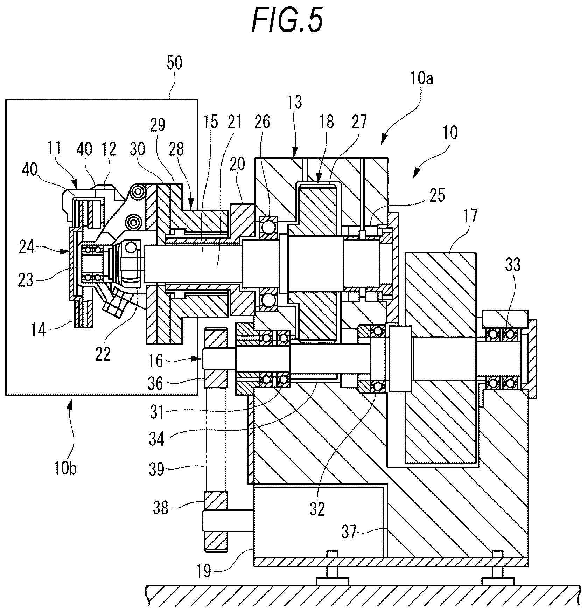

Fig. 5 is a vertical cross-sectional view showing a configuration example of the brake test device including the wear debris collection device shown in Fig. 4. A basic configuration of the brake test device 10 shown in Fig. 5 is the same as that of a known technique such as, for example, JP-A-H10-300597, and further, the brake hood (cover) 50 that covers the brake 11 in order to collect the debris and a sealing structure for preventing inflow of the external dust from a gap are added.

The brake test device 10 includes a low-speed rotation shaft 15 to which the rotor 14 of the brake 11 is attached, a high-speed rotation shaft 16 disposed parallel to the low-speed rotation shaft 15, and a flywheel 17 that is an inertial body attached to the high-speed rotation shaft 16. Further, the brake test device 10 includes a speed reduction unit 18 that reduces a rotational speed of the high-speed rotation shaft 16 and transmits the reduced rotational speed
to the low-speed rotation shaft 15, a motor 19 that drives the high-speed rotation shaft 16, a base 13 that supports units, a control unit that controls the units, and a measurement unit that measures various pieces of data of the brake 11 (all of which are not shown).

The low-speed rotation shaft 15 includes a first rotation shaft 21 and a second rotation shaft 23 coupled to each other by a universal joint 22. A circular plate portion 24 having a large diameter is provided at a left end of the second rotation shaft 23 in the drawing, and the rotor 14 is fitted to the circular plate portion 24. The low-speed rotation shaft 15 is supported by bearings 25 and 26 attached to the base 13. Further, a large gear 27 of the speed reduction unit 18 is attached to a portion between the bearings 25 and 26 of the low-speed rotation shaft 15.

A sleeve 20 fixed to the base 13 is disposed on a left side portion of the low-speed rotation shaft 15. A housing 28 is attached to the sleeve 20 via a bearing. Then, the caliper 12 of the brake 11 is attached to a flange portion 29 of the housing 28 via a plate 30.

The high-speed rotation shaft 16 is supported by bearings 31, 32, and 33 attached to the base 13. Further, a small gear 34 is formed on a left side of a center of the high-speed rotation shaft 16 in the drawing. The large gear 27 attached to the low-speed rotation shaft 15 meshes with the small gear 34. The large gear 27 and the small gear 34 constitute the speed reduction unit 18. The flywheel 17 is attached to the high-speed rotation shaft 16, and the flywheel 17 is disposed in a concave portion 35 provided in the base 13. Further, a pulley 36 is fitted to a left end of the high-speed rotation shaft 16 in the drawing.

On the other hand, the motor 19 is disposed in a concave groove 37 provided at a lower end of the base 13, and the pulley 38 is attached to a rotation shaft of the motor 19. Then, a belt 39 is wound around the pulley 36 of the high-speed rotation shaft 16 and the pulley 38 of the rotation shaft of the motor 19. Accordingly, the high-speed rotation shaft 16 is driven by the motor 19.

In the configuration shown in Fig. 5, it is assumed that the speed reduction unit 18 is used, but the speed reduction unit 18 may be omitted and a driving force of the motor 19 may be directly transmitted to the first rotation shaft 21. However, since it is necessary to generate an inertial force that simulates a weight of a vehicle on which the brake 11 is mounted, the flywheel 17 is necessary.

In the brake test device 10 shown in Fig. 5, when the high-speed rotation shaft 16 is driven by the motor 19, a rotational force of the high-speed rotation shaft 16 is transmitted to the low-speed rotation shaft 15 via the speed reduction unit 18. When the low-speed rotation shaft 15 rotates, the rotor 14 attached to the low-speed rotation shaft 15 rotates. In this state, friction materials 40 in the caliper 12 are pressed against the rotor 14. At this time, brake characteristics of the brake 11 can be determined by measuring distortion of the low-speed rotation shaft 15 and other various pieces of data thereof.

In the brake test device 10 shown in Fig. 5, the brake hood 50 is fixed to an outside of the housing (a caliper holding unit) 28 that does not rotate. Then, the brake hood 50 covers an entire outside of a brake attachment portion 10b including the caliper 12 and the rotor 14 of the brake 11, and houses the brake attachment portion 10b, the caliper 12, and the rotor 14 inside.

When the friction materials 40 in the caliper 12 are pressed against the rotor 14, pressing surfaces of the rotor 14 and the friction materials 40 are worn by a frictional force. Further, the rotor 14 and the friction materials 40 respectively generate debris due to the wear, and a part of these debris floats in air. Therefore, it is possible to collect and measure the generated debris in the air.

### <Manufacturing Steps of Collection Board>

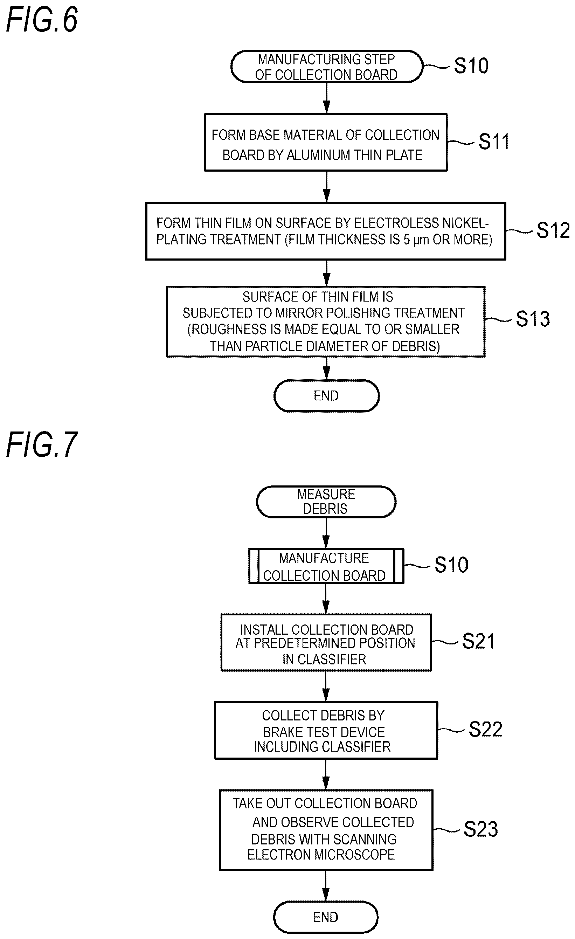

Fig. 6 shows an outline of manufacturing steps of the collection board 61 shown in Figs. 1(a) and 1(b). The manufacturing steps of Fig. 6 will be described below.

A thin plate of aluminum is prepared as a material, and the base material 61a of the collection board 61 is formed. For example, the board-shaped base material 61a having a diameter of 25[mm], a thickness of 0.55mm, and a flat surface shape is formed (S11).

The base material 61a is subjected to the electroless nickel-plating treatment to form the nickel thin film 61b on a surface (S12). A film thickness of the thin film 61b is set to 5µm or more. Since the film thickness is set to 5µm or more, when the debris 63 are observed with the scanning electron microscope, it is possible to ignore appearance of an influence of aluminum of a skin covered by the thin film 61b, that is, the base material 61a.

A surface of the collection board 61 on which the thin film 61b is formed is subjected to a surface polishing treatment to remove unevenness and scratches on the surface (S13). By the polishing, a roughness of the surface of the collection board 61 is made equal to or smaller than the particle diameter of the debris 63. Accordingly, the debris 63 are prevented from being buried in a scratch or a depression on the surface of the collection board 61, and a difference in a position of each particle of the debris 63 (a distance from an observation side to particles) is also eliminated, so that a particle shape and the like are easily grasped when the debris 63 are observed with the scanning electron microscope.

### <Procedure for Measuring Wear Debris>

Fig. 7 shows a procedure for measuring the wear debris. The procedure of Fig. 7 will be described below.

The collection board 61 manufactured by the manufacturing step (S10) shown in Fig. 6 is prepared and installed at a predetermined position of the classifier 62 (S21). That is, the surface of the thin film 61b is disposed in the collection portion 62b of the collection stage capable of collecting the debris 63 having the particle diameter to be observed so as to face the opening of the nozzle 62a from which the airflow 62c is blown out, that is, disposed as shown in Fig. 2(c).

In a state where the classifier 62 in which the collection boards 61 are installed is connected to the brake test device 10 shown in Figs. 4 and 5 according to the above procedure, the brake test device 10 is operated to perform a test of the brake 11 (S22). Accordingly, an airflow containing the debris 63 generated by the brake 11 is introduced into an inflow port of the classifier 62 via the tip end portion 50a of the brake hood 50 and the communication portion 55. Therefore, the debris 63 are collected by the collection board 61.

After an end of the test of the brake 11, the collection board 61 that has collected the debris 63 is taken out from the classifier 62, for example, manually by an operator or by using a predetermined robot, and is disposed on the sample stage of the scanning electron microscope (not shown) (S23). Accordingly, it is possible to observe the debris 63 on the collection board 61 with the scanning electron microscope, to analyze the components of the debris 63, to identify shapes and sizes of the debris 63, and the like.

### <Specific Example of Observation State>

### <Image in Case of Using Collection Board 61 of Embodiment>

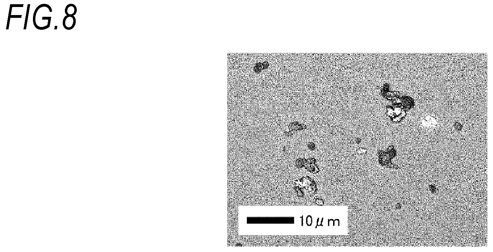

Fig. 8 shows an example of an image when the debris collected using the collection board 61 of the embodiment of the present invention are observed with the scanning electron microscope. That is, the collected debris 63 and the surface of the collection board 61 that collects the debris 63 appear in the image of Fig. 8.

The image shown in Fig. 8 shows an example of a case where the debris 63 generated from the brake device are observed with the scanning electron microscope.

In the image of Fig. 8, the debris 63 having particle diameters of about 0.1 to several µm appear in a clearly distinguishable state. Therefore, it is possible to easily perform a measurement such as a component analysis of the debris 63, specification of a shape of each particle, and specification of a particle diameter.

That is, in the image of Fig. 8, since the substance that constitutes the thin film 61b existing in a background of the debris 63 is clearly different from that of the debris 63, the debris 63 in each image and the thin film 61b in the background can be distinguished from each other. Further, since the thickness of the thin film 61b is sufficiently large, an influence of aluminum that constitutes the base material 61a of the skin does not appear in each image. Further, since the scratches, the unevenness, and the like on the surface of the thin film 61b are removed in advance by the mirror polishing, the debris 63 are not buried in the concave portion, and the distance from the observation side to the particles is the same, and thus the debris 63 clearly appear in the image.

### <Comparative Example: Case of Using Collection Board of Fluorine Resin-Treated Glass Fibers>

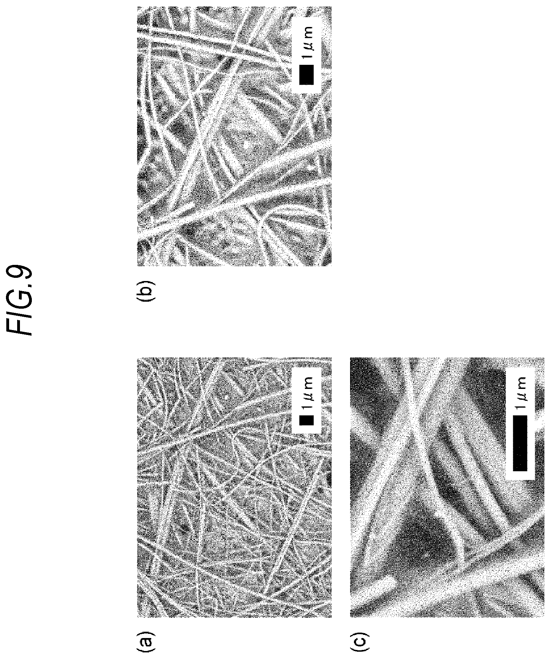

Figs. 9(a), 9(b), and 9(c) show examples of images when observing debris collected using a general collection board of a fluorine resin-treated glass fibers instead of the collection board 61 according to the present embodiment with the scanning electron microscope.

As shown in Figs. 9(a) to 9(c), although it is confirmed from the images that nano-sized particles considered to be the collected debris 63 are contained, shapes of particles are unclear and the particles are buried in a large number of fibers, which makes analysis difficult.

### <Comparative Example: Case of Using Collection Board Configured with Aluminum>

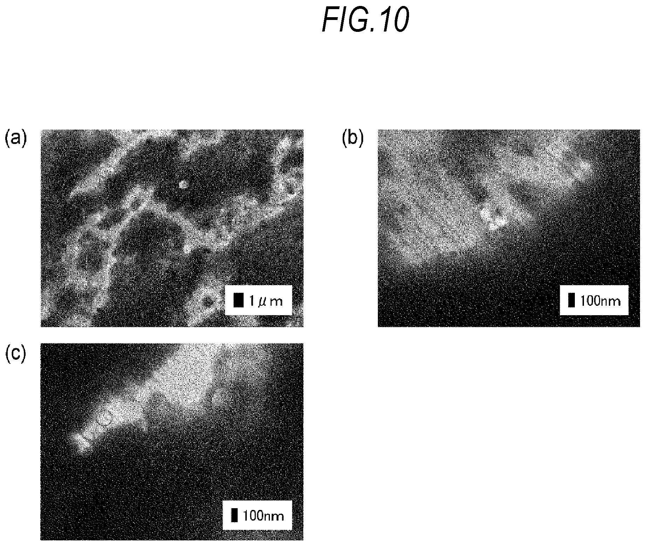

Figs. 10(a), 10(b), and 10(c) show examples of images when observing debris collected using a general collection board configured with aluminum instead of the collection board 61 according to the present embodiment with the scanning electron microscope.

As shown in Figs. 10(a) to 10(c), although it is confirmed from the images that nano-sized particles considered to be the collected debris 63 are contained, an analysis is difficult because the entire images containing the particles appear in a state of being covered with something.

That is, when the debris 63 collected by a general collection board are measured using the scanning electron microscope, images as shown in Figs. 9(a) to 9(c) or Figs. 10(a) to 10(c) are obtained, so that it is difficult to analyze the components of the debris 63 and grasp shapes, sizes, and the like of the debris 63. However, by using the special collection board 61 as shown in Figs. 1(a) and 1(b), it is easy to measure the debris 63 for each particle as in the image shown in Fig. 8.

Although the present invention has been described in detail with reference to specific embodiments, it will be apparent to those skilled in the art that various changes and modifications can be made without departing from the scope of the present invention as defined in the appended claims.

The present application is based on Japanese Patent Application (Japanese Patent Application No. 2018-190111) filed on Oct. 5, 2018.

### INDUSTRIAL APPLICABILITY

According to the present invention, there is an effect that it is possible to provide a dust measurement device and a dust measurement method capable of easily observing debris generated from a brake device. The present invention having this effect is useful for a dust measurement device and a dust measurement method for collecting and measuring dust from an aerosol containing the dust generated by a friction material that generates a braking force.

### REFERENCE SIGNS LIST

- 10: brake test device
- 10a: tester main body
- 10b: brake attachment portion
- 11: brake
- 12: caliper
- 13: base
- 14: rotor
- 15: low-speed rotation shaft
- 16: high-speed rotation shaft
- 17: flywheel
- 18: speed reduction unit
- 19: motor
- 20: sleeve
- 21: first rotation shaft
- 22: universal joint
- 23: second rotation shaft
- 24: circular plate portion
- 25, 26: bearing
- 27: large gear
- 28: housing (caliper holding unit)
- 31, 32, 33: bearing
- 34: small gear
- 36, 38: pulley
- 37: concave groove
- 39: belt
- 40: friction material
- 50: brake hood
- 55: communication portion
- 58: airflow
- 60: air sampler
- 61: collection board
- 61a: base material
- 61b: thin film
- 62: classifier
- 62a: nozzle
- 62b: collection portion
- 62c: airflow
- 63: wear debris
- 71: blower
- 72: HEPA filter
- 73, 74: pressure sensor
- 75: differential pressure gauge
- 80: controller
- SG1: control signal
- Pin: inside air pressure
- Pout: outside air pressure
- ΔP: differential pressure signal

## Claims

1. A dust measurement device for measuring wear debris (63) generated by a brake device comprising:
a collection board (61) that is disposed at a position where an aerosol containing dust (63) generated by a friction material collides with the collection board (61); and
a scanning electron microscope configured to observe the dust (63) on the collection board (61), wherein
the scanning electron microscope is configured to measure the dust (63) collected by the collection board based on an inertial force of the dust (63), and
a first substance that constitutes at least a surface of the collection board (61) is different from a material that constitutes a component contained in a second substance contained in the dust (63) to be measured,
wherein
the collection board (61) includes a base material (61a) and a thin film (61b) formed on a surface portion of the base material (61a),
the first substance is a material that can be plated, and
the thin film (61b) is formed on the surface portion of the base material (61a) by plating treatment of the first substance,
**characterized in that**
the first substance contains any one material of nickel, chromium, and cobalt.

2. The dust measurement device according to claim 1,
wherein a thickness of the thin film (61b) has a dimension equal to or larger than a predetermined size required for reducing an influence of the base material (61a) on the dust (63) in observation with the scanning electron microscope.

3. A dust measurement method for measuring wear debris (63) generated by a brake device, the dust measurement method comprising:
preparing a collection board (61) in which at least a first substance that constitutes a surface with which the dust (63) to be measured collides is different from a material that constitutes a component contained in a second substance contained in the dust (63);
disposing the collection board (61) at a position where an aerosol containing dust (63) to be measured collides with the collection board (61);
introducing an aerosol containing dust (63) generated by a friction material configured to generate a braking force into a vicinity of the collection board (61); and
collecting the dust (63) by the collection board (61) based on an inertial force of the dust (63), wherein
the collection board (61) includes a base material (61a) and a thin film (61b) formed on a surface portion of the base material (61a),
the first substance is a material that can be plated, and
the thin (61b) film is formed on the surface portion of the base material (61a) by plating treatment of the first substance,
**characterized in that**
the first substance contains any one material of nickel, chromium, and cobalt.

## Patentansprüche

1. Eine Staubmessvorrichtung zum Messen von Abriebpartikeln (63), die von einer Bremsvorrichtung erzeugt werden, umfassend:
eine Auffangplatte (61), die an einer Stelle angeordnet ist, an der ein Aerosol, das den von einem Reibmaterial erzeugten Staub (63) enthält, mit der Auffangplatte (61) kollidiert; und
ein Rasterelektronenmikroskop, das so ausgelegt ist, dass es den Staub (63) auf der Auffangplatte (61) beobachtet, wobei
das Rasterelektronenmikroskop so ausgelegt ist, dass es den von der Auffangplatte aufgefangenen Staub (63) auf der Grundlage einer Trägheitskraft des Staubs (63) misst, und
eine erste Substanz, die zumindest eine Oberfläche der Auffangplatte (61) bildet, sich von einem Material unterscheidet, das eine Komponente bildet, die in einer zweiten Substanz enthalten ist, welche in dem zu messenden Staub (63) enthalten ist,
wobei die Auffangplatte (61) ein Grundmaterial (61a) und einen auf einem Oberflächenabschnitt des Grundmaterials (61a) ausgebildeten Dünnfilm (61b) umfasst,
die erste Substanz ein Material ist, das galvanisch abgeschieden werden kann, und
der Dünnfilm (61b) auf dem Oberflächenabschnitt des Grundmaterials (61a) durch eine Galvanisierungsbehandlung mit der ersten Substanz gebildet wird, **dadurch gekennzeichnet, dass**
die erste Substanz eines der Materialien Nickel, Chrom und Kobalt enthält.

2. Die Staubmessvorrichtung nach Anspruch 1,
wobei die Dicke des Dünnfilms (61b) eine Abmessung aufweist, die gleich oder größer ist als eine vorbestimmte Größe, die erforderlich ist, um den Einfluss des Grundmaterials (61a) auf den Staub (63) bei der Beobachtung mit dem Rasterelektronenmikroskop zu verringern.

3. Verfahren zur Staubmessung zum Messen von durch eine Bremsvorrichtung erzeugten Abriebpartikeln (63), wobei das Verfahren zur Staubmessung umfasst:
Bereitstellen einer Auffangplatte (61), bei der zumindest eine erste Substanz, die eine Oberfläche bildet, mit der der zu messende Staub (63) kollidiert, sich von einem Material unterscheidet, das eine Komponente bildet, die in einer zweiten, im Staub (63) enthaltenen Substanz enthalten ist;
Anordnen der Auffangplatte (61) an einer Stelle, an der ein Aerosol, das den zu messenden Staub (63) enthält, mit der Auffangplatte (61) kollidiert;
Einleiten eines Aerosols, das den Staub (63) enthält, der von einem Reibmaterial erzeugt wird, das so ausgelegt ist, dass es eine Bremskraft erzeugt, in die Nähe der Auffangplatte (61); und
Auffangen des Staubs (63) durch die Auffangplatte (61) auf der Grundlage einer Trägheitskraft des Staubs (63),
wobei die Auffangplatte (61) ein Grundmaterial (61a) und einen Dünnfilm (61b) umfasst, der auf einem Oberflächenabschnitt des Grundmaterials (61a) ausgebildet ist,
wobei die erste Substanz ein Material ist, das galvanisch abgeschieden werden kann, und
der Dünnfilm (61b) auf dem Oberflächenabschnitt des Grundmaterials (61a) durch eine Galvanisierungsbehandlung mit der ersten Substanz gebildet wird,
**dadurch gekennzeichnet, dass** die erste Substanz eines der Materialien Nickel, Chrom und Kobalt enthält.

## Revendications

1. Dispositif de mesure de poussière destiné à mesurer les débris d'usure (63) générés par un dispositif de freinage, comprenant :
une plaque collectrice (61) disposée à une position où un aérosol contenant de la poussière (63) générée par un matériau de frottement entre en collision avec la plaque collectrice (61) ; et
un microscope électronique à balayage configuré pour observer la poussière (63) sur la plaque collectrice (61), dans lequel
le microscope électronique à balayage est configuré pour mesurer la poussière (63) collectée par la plaque collectrice sur la base de la force d'inertie de la poussière (63), et
une première substance qui constitue au moins une surface de la plaque collectrice (61) est différente d'un matériau qui constitue un composant contenu dans une deuxième substance contenue dans la poussière (63) à mesurer,
dans lequel la plaque collectrice (61) inclut un matériau de base (61a) et un film mince (61b) formé sur une portion de surface du matériau de base (61a),
la première substance est un matériau qui peut être plaqué, et
le film mince (61b) est formé sur la portion de surface du matériau de base (61a) par traitement de placage de la première substance,
**caractérisé en ce que** la première substance contient un matériau quelconque parmi le nickel, le chrome et le cobalt.

2. Dispositif de mesure de poussière selon la revendication 1,
dans lequel l'épaisseur du film mince (61b) a une dimension supérieure ou égale à une taille prédéterminée requise pour réduire l'influence du matériau de base (61a) sur la poussière (63) lors de l'observation avec le microscope électronique à balayage.

3. Procédé de mesure de poussière destiné à mesurer les débris d'usure (63) générés par un dispositif de freinage, le procédé de mesure de poussière comprenant :
la préparation d'une plaque collectrice (61) dans laquelle au moins une première substance qui constitue une surface avec laquelle la poussière (63) à mesurer entre en collision est différente d'un matériau qui constitue un composant contenu dans une deuxième substance contenue dans la poussière (63) ;
la disposition de la plaque collectrice (61) à une position où un aérosol contenant de la poussière (63) à mesurer entre en collision avec la plaque collectrice (61) ;
l'introduction d'un aérosol contenant de la poussière (63) générée par un matériau de frottement configuré pour générer une force de freinage à proximité de la plaque collectrice (61) ; et
la collecte de la poussière (63) par la plaque collectrice (61) sur la base d'une force d'inertie de la poussière (63), dans lequel
la plaque collectrice (61) inclut un matériau de base (61a) et un film mince (61b) formé sur une portion de surface du matériau de base (61a),
la première substance est un matériau qui peut être plaqué, et
le film mince (61b) est formé sur la portion de surface du matériau de base (61a) par traitement de placage de la première substance,
**caractérisé en ce que** la première substance contient un matériau quelconque parmi le nickel, le chrome et le cobalt.
